# EUROPÄISCHE PATENTANMELDUNG

(11) **EP 4 624 059 A1**
(43) Veröffentlichungstag der Anmeldung: **01.10.2025**
(21) Anmeldenummer: 24166183.4
(22) Anmeldetag: 26.03.2024
(51) Int. Cl.: B05D 3/06, B32B 15/08, B32B 37/12, B32B 37/20

(54) **VERFAHREN ZUM HERSTELLEN EINES MIT EINER ORGANISCHEN FOLIE BESCHICHTETEN METALLFLACHPRODUKTS**

(71) Anmelder: ThyssenKrupp Steel Europe AG, 47166 Duisburg (DE)
(72) Erfinder: Ehlers, Dr. Jan-Eric, 44225 Dortmund (DE)
(74) Vertreter: ThyssenKrupp Steel Europe AG

(57) **Zusammenfassung**

Die Erfindung betrifft ein Verfahren zum Herstellen eines organisch beschichteten Metallflachprodukts (1') nach Anspruch 1.

## Beschreibung

Die Erfindung betrifft ein Verfahren zum Herstellen eines mit einer organischen Folie beschichteten Metallflachprodukts.

Der Prozess zum Beschichten von Metallflachprodukten, beispielsweise von Stahl- oder Aluminiumflachprodukten, mit einer organischen Folie sowie entsprechende Bandbeschichtungsanlagen zur Durchführung des Prozesses sind Stand der Technik. Auf einem bandförmigen Metallflachprodukt wird mittels Walzenauftrags (Coater) flüssiger Klebstoff aufgetragen. In einem nachgelagerten Trockenofen verdunsten die im konventionellen Klebstoff enthaltenden Lösemittel und die Klebstoffvernetzung erfolgt durch Aktivierung eines im konventionellen Klebstoff enthaltenden blockierten Initiators. Die verwendeten Klebstoffe sind in der Regel so formuliert, dass sie nach Verlassen des Trocknungsofens noch ausreichend reaktiv sind, dass direkt im Nachgang eine applizierte organische Folie eine feste Verbindung eingehen kann.

Des Weiteren ist auch bekannt, insbesondere lösemittelhaltige, vor allem wässrige, aber auch lösemittelfreie Beschichtungsstoffe mittels UV- und/oder EB-Bestrahlung (Elektronenstrahlung: electron beam) nach Auftrag auf einem Metallflachprodukt zu vernetzen, wobei die Vernetzung sehr schnell und im Vergleich zu konventionellen Trocknungsöfen sehr effizient erfolgen kann, vgl. beispielhaft DE 10 2008 029 580 A1, WO 2023/053107 A1. Dabei ist die EB-Bestrahlung der letzte Prozessschritt in der Härtung der Beschichtung. Dies entspricht der vorherrschenden Meinung, nach der die Strahlenvernetzung nach der Formgebung als letzter Verarbeitungsschritt in der Prozesskette erfolgt. Dadurch ist jedoch bei einem späteren Kaschieren mit einer Folie die Vernetzungsreaktion bereits abgeschlossen, bevor ein Kontakt mit einer organischen Folie vorliegt, so dass keine feste Verbindung zwischen (ggf. mit Klebstoff) beschichtetem Metallflachprodukt und applizierter Folie sichergestellt werden kann. Aus der DE 43 02 124 A1 ist ein Verfahren zum Elastifizieren von Überzügen bekannt, die aus Überzugsmitteln auf der Basis von radikalisch oder kationisch polymerisierbaren Bindemitteln durch Aushärtung mit energiereicher Strahlung erhalten wurden, das dadurch gekennzeichnet ist, dass nach der Aushärtung eine Wärmebehandlung, bevorzugt bei 200 bis 230 °C für 3 bis 5 Minuten durchgeführt wird. Dadurch können Überzüge elastifiziert werden, die durch energiereiche Strahlung, wie UV-Strahlung oder Elektronenstrahlung voll ausgehärtet wurden und keine wärmehärtbaren Anteile enthalten.

Aufgabe der vorliegenden Erfindung ist es, ein gattungsgemäßes Verfahren anzugeben, mit welchem eine feste, aber gegebenenfalls temporäre, also wieder lösbare Verbindung zwischen einer Metallflachprodukt und einer applizierten organischen Folie mittels eines Beschichtungsmaterials sichergestellt werden kann.

Diese Aufgabe wird gelöst durch ein Verfahren mit den Merkmalen des Anspruchs 1. Weiterführende Ausgestaltungen sind in den Unteransprüchen beschrieben.

Die Lehre betrifft ein Verfahren zum Herstellen eines organisch beschichteten Metallflachprodukts, umfassend die Schritte:
- Bereitstellen eines Metallflachprodukts;
- Auftragen eines flüssigen Beschichtungsmaterials auf dem Metallflachprodukt;
- mindestens teilweise Vernetzen des flüssig aufgetragenen Beschichtungsmaterials auf dem Metallflachprodukt;
- Applizieren einer organischen Folie auf dem Metallflachprodukt.

Wesentlich für die Erfindung ist, dass nach dem mindestens teilweisen Vernetzen des flüssigen Beschichtungsmaterials ein Aktivieren des mindestens teilweise vernetzten Beschichtungsmaterials erfolgt, bevor die organische Folie auf dem Metallflachprodukt appliziert wird, wobei das Beschichtungsmaterial ein mit aktinischer Strahlung härtbares Beschichtungsmaterial ist. Mithin enthält das Beschichtungsmaterial mindestens einen Bestandteil, ausgewählt aus der Gruppe bestehend aus niedermolekularen, oligomeren und polymeren organischen Verbindungen, die jeweils mindestens eine mit aktinischer Strahlung aktivierbare Gruppe enthalten oder daraus bestehen. In diesem Bestandteil können chemisch gleiche oder chemisch unterschiedliche organische Verbindungen vorliegen.

Im Sinne der vorliegenden Erfindung ist unter aktinischer Strahlung elektromagnetische Strahlung wie UV-Strahlung (UV-A, UV-B und UV-C) oder kurzwelligerer Röntgenstrahlung und/oder Korpuskularstrahlung wie Elektronenstrahlung (EB-Bestrahlung) zu verstehen.

Erfolgt die Bestrahlung mit UV-Strahlung, enthält das Beschichtungsmaterial radikalische oder kationische Photoinitiatoren, die die Vernetzung (Härtung) initiieren, wobei die mit aktinischer Strahlung aktivierbare Gruppe bevorzugt mindestens eine C-C-Doppelbindung aufweist, beispielsweise Acrylsäure- und Methacrylsäureester. Beispiele für radikalisch polymerisierbare Beschichtungsmaterialen werden in der DE 43 02 124 A1, Seite 2, Zeile 65 bis Seite 3, Zeile 10 beschrieben. Beispiele für Photoinitiatoren werden in der DE 43 02 124 A1, Seite 3, Zeile 21 bis Seite 3, Zeile 36 beschrieben. Kationisch polymerisierbares Beschichtungsmaterial weist Verbindungen auf, die in einer Ausführung ein Gemisch von Epoxidgruppen und Hydroxylgruppen enthaltenden Komponenten enthalten. Beispiele werden in der DE 43 02 124 A1, Seite 2, Zeile 50 bis Seite 3, Zeile 57 beschrieben.

Bei Verwendung von Korpuskularstrahlung werden chemische Bindungen des mindestens einen Bestandteils gespalten, sodass freie Radikale entstehen. Diese gehen im nächsten Schritt neue Molekularverbindungen ein, wobei eine mindestens teilweise Vernetzung des Beschichtungsmaterials stattfindet. Eine ionische und insbesondere radikalische Polymerisation läuft schnell durch, bis keine Reaktionspartner mehr räumlich in der Nähe sind. Jedoch können durch Einsatz von Copolymeren auch nach der Polymerisation noch reaktive Gruppen übrigbleiben, die z.B. für eine Polykondensation oder Polyaddition zur Verfügung stehen, wie in einer Ausführung zu Polyester-Acrylat oder Polyurethan-Acrylat führen. Durch die aktinische Strahlung vernetzt idealerweise nur das Acrylat.

In einer Ausführung der Erfindung wird keine vollständige Vernetzung des Beschichtungsmaterials mittels aktinischer Strahlung durchgeführt. Eine vollständige Vernetzung liegt vor, wenn, gegebenenfalls trotz weiterer aktinischer Strahlung, keine weiteren kovalenten chemischen Bindungen zwischen Monomeren, Oligomeren und/oder Polymeren gebildet werden oder gebildet werden können, bzw. alternativ oder kumulativ, wenn die Maschenweite, also der Abstand zwischen den Verhakungspunkten von Polymerketten, nicht mehr verringert wird oder verringert werden kann. Das Beschichtungsmaterial weist dann bei Raumtemperatur keine Anfassklebrigkeit mehr auf, im Fachjargon als Tack bezeichnet.

Die zumindest teilweise Vernetzung mittels aktinischer Strahlung findet bei relativ niedrigen Temperaturen von 10 bis 60 °C statt, sodass auch ein lösemittelfreier Lack beim Auftragen fließfähig vorliegt.

In einer Ausführung enthält oder besteht das Beschichtungsmaterial aus Präpolymeren, Präcopolymeren, Copolymeren und/oder Polymeren als Edukte, die nach Härtung bzw. Vernetzung zu einem Produkt, also als ausreagiertes Endprodukt ausgewählt aus der Gruppe enthaltend oder bestehend aus Polyacrylate, Polyesteracrylate, Polyurethanacrylate, Polyepoxidacrylate bilden. Zusätzlich kann das noch nicht gehärtete bzw. vernetzte Beschichtungsmaterial Additive, Vernetzer, Initiatoren, Stabilisatoren, Pigmente und/oder Füllstoffe enthalten.

In einer alternativen oder zusätzlichen Ausführung bildet die Beschichtungsmasse durch die mindestens teilweise Vernetzung ein Duroplast, dessen Polymere jedoch noch genügend Freiheitsgrade zur Bildung eines Tacks (Anfassklebkraft, also eine Form der Adhäsion, die die Stärke beschreibt, mit der sich der Klebstoff im ersten Moment mit der zu verklebenden Oberfläche verbindet) nach thermischer Aktivierung aufweisen und/oder dessen Bestandteile noch weitere reaktive funktionelle Gruppen für eine thermische Vernetzung oder eine Kopplung mit der zu applizierenden Folie aufweisen.

Das Beschichtungsmaterial ist ein Klebstoff oder ein Lack, bevorzugt ein Klebstoff.

Das mindestens teilweise Vernetzen des vorzugsweise flüssigen Beschichtungsmaterials kann mittels einer Strahlungseinheit in Form eines UV- oder Korpuskular-, bevorzugt EB-Strahlers oder Kombination davon durchgeführt werden. In einer Ausführung der Erfindung wird zur aktinischen Härtung sowohl UV-Strahlung als auch, bevorzugt anschließend Korpuskularstrahlung eingesetzt.

Die Erfindung ermöglicht im Wesentlichen einen ressourceneffizienten Prozess bezüglich des beispielsweisen Einsatzes von Lösemitteln und eine Reduktion von CO₂-Emissionen, insbesondere im Vergleich zum bisherigen konventionellen Folienbeschichtungsprozess mit Konvektionsöfen. Des Weiteren ist eine gewisse Flexibilität gegeben, da der Prozess und/oder die Vorrichtung auch eine strahlenhärtende Lackierung im Bandbeschichtungsprozess ermöglicht.

Bevorzugt wird ein lösemittelfreies Beschichtungsmaterial verwendet. Dadurch werden keine schädlichen Emissionen durch Verdunsten freigesetzt, so dass eine umweltfreundlichere Umsetzung im Vergleich zur konventionellen Folienbeschichtung mit lösemittelhaltigen Beschichtungsmaterialien erfolgen kann. Unter "lösemittelfrei" sind beispielsweise flüchtige organische Verbindungen (VOC) im Beschichtungsmaterial zu verstehen, deren Gehalt < 5,0 Gew.-%, insbesondere < 2,50 Gew.-%, vorzugsweise < 1,50 Gew.-%, bevorzugt < 0,50 Gew.-%, weiter bevorzugt < 0,20 Gew.-%, einschließlich 0, beträgt. Weiter bevorzugt wird ein wasserbasiertes Beschichtungsmaterial verwendet.

Dadurch dass beispielsweise im Vergleich zur konventionellen Verfahrensweise mit Lösemittel ein Verdunsten des VOC infolge einer Erwärmung verzichtet werden kann, sind keine strengen Sicherheitsmaßnahmen erforderlich und auch eine Reduzierung der sogenannten "Scope 1" - CO₂-Emissionen möglich.

Der Prozess zur Applikation eines flüssigen Beschichtungsmaterials, gegebenenfalls als Dispersion, insbesondere als wässrige Dispersion, und damit verbunden auch geeignete Einheiten zur Applikation ist Stand der Technik und damit dem Fachmann geläufig. Die Applikation kann mittels Sprühens, Tauchen oder bevorzugt Walzenauftrag im Coil-Coating-Verfahren erfolgen.

Im Sinne der Erfindung ist nicht nur eine einseitige Beschichtung mit dem Beschichtungsmaterial und ggf. mit einer organischen Folie zu verstehen, sondern auch eine beidseitige Beschichtung, wobei der erfindungsgemäße Prozess entweder gleichzeitig auf beiden Seiten des Metallflachprodukts oder zeitlich versetzt durchgeführt wird.

Die sogenannte PMT (Peak Metal Temperature) stellt die höchste erreichte Temperatur der Metalloberfläche dar und wird vorzugsweise mittels Pyrometer oder anderen geeigneten Mitteln bestimmt.

Das Beschichtungsmaterial ist in einer Ausführung zusätzlich thermisch härtbar.

Im Sinne der vorliegenden Erfindung bedeutet der Begriff "thermische Härtung" die durch Hitze mindestens teilweise initiierte Vernetzung, bei der in der noch nicht vollständig vernetzten Beschichtung entweder ein separat vorliegendes Vernetzungsmittel oder aber selbstvernetzende Bindemittel vorliegen. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeilen 24 bekannt.

Das mindestens teilweise Aktivieren des zumindest teilweise vernetzten Beschichtungsmaterials, bevorzugt Klebstoffs, kann mittels einer Aktivierungseinheit in Form eines IR- oder NIR-Strahlers oder Induktionseinheit durchgeführt werden. Durch die Aktivierung weist die Beschichtung einen Tack, auch Anfassklebkraft genannt, auf.

Aufgrund des Tacks lässt sich eine Folie in einer Ausführung physikalisch, d.h. nicht-kovalent bereits anbinden.

Erfindungsgemäß wird die Folie auf das Beschichtungsmaterial appliziert, bevorzugt kaschiert, ein- oder beidseitig.

Eine festere Anbindung wird in einer Alternative erreicht, wenn noch reaktive Gruppen im Beschichtungsmaterial, mit der Folienoberfläche reagieren können, z.B. OH-Gruppen. Dann wird eine chemische, d.h. kovalente Anbindung erreicht.

Hierzu weist das mindestens teilweise aktivierte Beschichtungsmaterial noch reaktive funktionelle Gruppen auf, die komplementär zu reaktiven funktionellen Gruppen der Folienoberfläche sind, wie oben schon beschrieben.

Die im Prozess beschriebene nachgelagerte Aufwärmung des strahlenbasiert mindestens teilweise vernetzten Beschichtungsmaterials dient entweder rein zur Herstellung der Klebrigkeit des Beschichtungsmaterials oder zusätzlich, insbesondere bei Vorliegen reaktiver funktioneller komplementärer Gruppen, zur mindestens teilweise thermisch initiierten Nachvernetzung.

Grundsätzlich muss die Temperatur für eine Folienanbindung eines aktinisch zu vernetzenden Beschichtungsmaterials nicht so hoch sein wie bei einem Vernetzen/Härten eines lösemittelbasierten 1K-Klebstoffs. Die eingesetzten Beschichtungsmaterialien sollten insbesondere durch die Auswahl eines oder mehrerer Bindemittel so eingestellt sein, dass die Erweichung erst deutlich oberhalb der maximalen Nutzungstemperatur liegt. Zum einen kann das Vernetzen bei der aktinischen Bestrahlung ohne Zunahme der Temperatur erfolgen, d. h. dass ein Vernetzen bereits bei einer PMT bei Raumtemperatur beispielsweise zwischen 10 und 30 °C stattfindet. Die Temperatur respektive PMT kann zum anderen auch mindestens von 40 °C, 50 °C, 60 °C, 70 °C, 80 °C, eingestellt werden, vorzugsweise mindestens 100 °C und bevorzugt bis zu 180 °C.

Für die Aktivierung zur Erzeugung des Tacks muss zumindest die Oberfläche oder auch tiefere Schichten oder das gesamte Beschichtungsmaterials auf eine Temperatur erwärmt werden, die oberhalb der Glasübergangstemperatur und oberhalb der maximalen Nutzungstemperatur des Beschichtungsmaterials liegt.

Die PMT für das Aktivieren des mindestens teilweise vernetzten Beschichtungsmaterials auf dem Metallflachprodukt liegt im Wesentlichen zwischen 100 und 300 °C, insbesondere zwischen 120 und 270 °C, vorzugsweise zwischen 150 und 250 °C, bevorzugt zwischen 180 und 230 °C.

Das Aktivieren erfolgt zwischen 100 bis 300 °C, insbesondere bei mindestens 110 °C, bevorzugt mindestens 120 °C und maximal 250 °C, bevorzugt maximal 200 °C, besonders bevorzugt maximal 180 °C. Die Dauer des Aktivierens beträgt in einer Ausführung mindestens 0,1 s, bevorzugt mindestens 0,3 s, besonders bevorzugt mindestens 0,5 s, insbesondere mindestens 1,0 s und maximal 60 s, bevorzugt maximal 30,0 s, besonders bevorzugt maximal 20,0 s, insbesondere maximal 10,0 s.

In eine Ausführung wird das Metallflachprodukt, insbesondere als Band mit einer Geschwindigkeit (Bandgeschwindigkeit) von mindestens 20 m/min, bevorzugt mindestens 30 m/min, besonders bevorzugt mindestens 40 m/min, insbesondere mindestens 50 m/min und maximal 160 m/min, bevorzugt maximal 140 m/min, besonders bevorzugt maximal 120 m/min, insbesondere maximal 100 m/min bewegt.

Unter "Metallflachprodukt" werden dabei hergestellte Bleche oder vergleichbar beschaffene Bänder als Walzerzeugnisse aus einem Aluminiumwerkstoff (Aluminiumflachprodukt) oder einem Stahlwerkstoff (Stahlflachprodukt) verstanden, welches entweder warmgewalzt, quasi einem Warmband, oder bevorzugt kaltgewalzt, quasi einem Kaltband, entsprechen kann.

Kommt beispielsweise ein Stahlflachprodukt zur Anwendung, kann es vorzugsweise mit einem metallischen Überzug bereitgestellt werden. Bevorzugt kann das Stahlflachprodukt mit einem zinkbasierten Überzug beschichtet sein, besonders bevorzugt durch Schmelztauchbeschichten. Dabei kann das metallische Schmelzbad neben Zink und unvermeidbaren Verunreinigungen zusätzliche Elemente wie Aluminium mit einem Gehalt bis zu 15 Gew.-%, insbesondere bis zu 10 Gew.-%, vorzugsweise bis zu 8 Gew.-%, bevorzugt bis zu 5 Gew.-% und/oder Magnesium mit einem Gehalt bis zu 15 Gew.-%, insbesondere bis zu 10 Gew.-%, vorzugsweise bis zu 8 Gew.-%, bevorzugt bis zu 5 Gew.-% in dem Überzug enthalten oder daraus bestehen. Ist ein verbesserter Korrosionsschutz gefordert, kann das metallische Schmelzenbad enthalten oder bestehen aus Magnesium mit einem Gehalt von mindestens 0,3 Gew.-%, insbesondere von mindestens 0,6 Gew.-%, vorzugsweise von mindestens 0,9 Gew.-%. Zusätzlich oder alternativ kann Aluminium zusätzlich zu Magnesium mit einem Gehalt von mindestens 0,1 Gew.-%, insbesondere von mindestens 0,3 Gew.-% vorhanden sein, um beispielsweise eine Anbindung des metallischen Überzugs an das Stahlflachprodukt zu verbessern und insbesondere eine Diffusion von Eisen aus dem Substrat in den Überzug bei einer Wärmebehandlung des beschichteten Stahlflachprodukts im Wesentlichen zu vermeiden, damit beispielsweise eine gute Klebeignung gewährleistet werden kann. Dabei kann eine Dicke des metallischen Überzugs je Seite zwischen 1,5 und 60 µm, insbesondere zwischen 2 und 50 µm, vorzugsweise zwischen 3 und 30 µm über bekannte und oberhalb des Schmelzenbads angeordneten Abstreifdüsen eingestellt werden.

Enthält oder besteht das metallische Schmelzenbad aus Magnesium in den vorgenannten Grenzen, Aluminium in den vorgenannten Grenzen und Rest Zink nebst unvermeidbaren Verunreinigungen, ist der sich daraus ergebende metallische Überzug auf dem Stahlflachprodukt in der Fachwelt als Zink-Magnesium (ZM) oder Zn-Al-Mg bekannt.

Bei einer bevorzugten Variante beträgt der Aluminiumgehalt im metallischen Schmelzbad 1,1 bis 8 Gew.-%, insbesondere mindestens 1,2 und maximal bis 8 Gew.-%, insbesondere maximal bis 5 Gew.-%.

Bei einer bevorzugten Variante beträgt der Magnesiumgehalt im metallischen Schmelzbad 1,1 bis 8 Gew.-%, insbesondere mindestens 1,2 und maximal bis 8 Gew.-%, insbesondere maximal bis 5 Gew.-%.

Der Überzug kann auch nur Zink mit geringen Aluminiumbestandteilen, insbesondere bis zu 1,0 Gew.-%, vorzugsweise bis zu 0,70 Gew.-%, bevorzugt bis zu 0,50 Gew.-% und > 0 Gew.-% neben unvermeidbaren Verunreinigungen enthalten, auch mit der Bezeichnung "Z" in Fachkreisen bekannt.

Als unvermeidbare Verunreinigungen können beispielsweise Elemente aus der Gruppe Silizium, Antimon, Blei, Titan, Kalzium, Mangan, Zinn, Lanthan, Cer und Chrom einzeln oder in Kombination mit in Summe bis zu 0,5 Gew.-%, insbesondere bis zu 0,3 Gew.-% im metallischen Schmelzbad enthalten sein.

Alternativ kann das Stahlflachprodukt mit einem zinkbasierten Überzug beschichtet sein, durch elektrolytische Abscheidung, in Fachkreisen mit der Bezeichnung "ZE" oder "EG" bekannt.

Dabei kann eine Dicke des metallischen Überzugs je Seite zwischen 1 und 60 µm, insbesondere zwischen 2 und 50 µm, vorzugsweise zwischen 3 und 30 µm eingestellt werden.

Es kann vorteilhaft sein, wenn die Folie plasmavorbehandelt wird. Damit kann einerseits die Polarität und damit auch die Benetzbarkeit der Folienoberfläche erhöht werden. Eine Plasmavorbehandlung kann inline erfolgen oder bereits im Anlieferzustand vorhanden sein. Andererseits können auch funktionelle Gruppen, z.B. OH-Gruppen, auf die Oberfläche der Folie eingebracht werden, welche insbesondere der kovalenten oder auch der nicht-kovalenten Anbindung mit dem Beschichtungsmaterial zur Verfügung stehen. Die Adhäsion kann dadurch erhöht werden.

Erfindungsgemäß kann die Folie in einer Alternative als Nutzfolie, d.h diese verbleibt permanent auf dem Produkt oder in einer anderen Alternative als Schutzfolie, d.h diese verbleibt temporär auf dem Produkt zur Verarbeitung des Stahlflachprodukts, aufkaschiert werden.

Durch die Zusammensetzung des Beschichtungsmaterials, also den Anteil an organischen Verbindungen, die mit aktinischer Strahlung aktivierbare Gruppen enthalten im Verhältnis zu dem Anteil an thermisch härtbaren Verbindungen mit reaktiven funktionellen Gruppen komplementär zu reaktiven funktionellen Gruppen an der Oberfläche der Folie, die mit dem Beschichtungsmaterial in Kontakt gebracht wird, kann der Fachmann eine der oben genannten Alternativen ansteuern. Bei einem Anteil an thermisch härtbaren funktionellen Gruppen, die eine permanente Verbindung zur Folie gewährleisten, bleibt die Folie als Nutzfolie auch zur weiteren Verarbeitung und späteren Nutzung, auf dem Stahlflachprodukt. Sind keine oder für eine feste Verbindung zu wenig thermisch härtbare Anteile in dem Beschichtungsmaterial vorhanden, erfolgt lediglich eine temporäre, reversible Anbindung der Folie. So kann beispielsweise bei Decklacken als Beschichtungsmaterial eine Folienanbindung lediglich über Tack und ggf. einer Klebschicht oder einer Plasmabehandlung der Folienoberfläche erfolgen. In der Praxis kann dazu eine plasmavorbehandelte PE-Folie (Polyethylen) oder einer. PSA-beschichteten (Pressure Sensitive Adhesive) Folie als Klebstoff eingesetzt werden. Die Folie kann dann z.B. nach Umformen des Stahlflachprodukts wie Rollprofilieren rückstandsfrei und ohne Beeinträchtigung der Lackoberfläche wieder abgezogen werden.

Die Erfindung betrifft das mit dem oben beschriebenen Verfahren hergestellte Metallflachprodukt.

Gegenstand der vorliegenden Erfindung ist auch ein Metallflachprodukt mit einer darauf applizierten Folie, wobei zwischen Folie und Metalloberfläche ein mit aktinischer Strahlung mindestens teilweise vernetztes und gegebenenfalls mit thermischer Strahlung mindestens teilweise vernetztes Beschichtungsmaterial angeordnet ist. Das entsprechende Beschichtungsmaterial kann vom Fachmann aufgrund seiner chemischen Zusammensetzung, wie zum Beispiel dem chemischen Aufbau der Polymere oder Reste von Photoinitiatoren identifiziert werden.

Gegenstand der vorliegenden Erfindung ist ferner die Verwendung von aktinischer Strahlung zum mindestens teilweisen Vernetzen eines Beschichtungsmaterials auf einer Metalloberfläche als unmittelbar dem Beschichten folgender Prozessschritt. In diesem Zusammenhang werden Verfahrensschritte, wie beispielsweise Einstellen der Beschichtungsdicke, Kontrolle et cetera nicht als eigenständiger Prozessschritt berücksichtigt.

Die Erfindung umfasst auch beliebige Kombinationen der oben beschriebenen Ausführungen und Alternativen.

Näher erläutert wird die Erfindung anhand der folgenden Ausführungsbeispiele in Verbindung mit der Zeichnung.

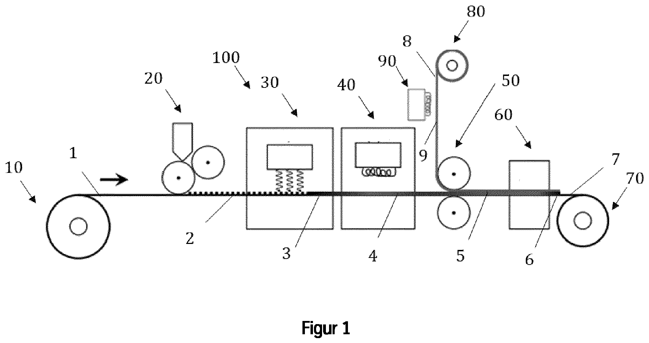

Die Zeichnung zeigt die Erfindung am Beispiel einer schematisch dargestellten Illustration. **Figur 1** zeigt eine Prinzipskizze einer Bandbeschichtungsanlage (100) zum Herstellen eines mit einer organischen Folie beschichteten Metallflachprodukts (7). Ein Metallflachprodukt (1) in Form eines Coils wird bereitgestellt. Dabei kann es sich um ein Aluminiumflachprodukt oder vorzugsweise um ein Stahlflachprodukt, bevorzugt mit einem zinkbasierten Überzug beschichtet, handeln. Das somit bereitgestellte Metallflachprodukt (1) in Coil-Form wird auf einem Abhaspler (10) der Bandbeschichtungsanlage (100) platziert und abgerollt. Die nachfolgende Prozesskette ist Standard in einer einfachen Konfiguration dargestellt, kann davon, je nach Anlagenkonfiguration, auch abweichen. Das abgerollte Metallflachprodukt (1) kann eine dem Fachmann bekannte und nicht dargestellte Richtmaschine durchlaufen. Das abgerollte Metallflachprodukt (1) kann auch eine nichtdargestellte Reinigungs- und Konversionseinheit zum Reinigen und zum Vorbehandeln für eine Beschichtungsstoffanbindung an die metallischen Oberflächen durchlaufen. Ferner durchläuft das Metallflachprodukt: eine Auftragseinheit (20), beispielsweise in Form einer Walzenauftragseinheit, zum Auftragen eines flüssigen Beschichtungsmaterials (2), im Folgenden am Beispiel eines Beschichtungsmaterials näher erläutert, auf dem Metallflachprodukt (nicht erwähnt und dargestellt ist eine Vorerwärmung von lösemittelfreien Beschichtungsmaterialien auf ca. 40 bis 60°C); eine Strahlungseinheit (30), beispielsweise eine UV- und/oder EB-Strahlungseinheit, zum mindestens teilweise Vernetzen des Beschichtungsmaterials (3) auf dem Metallflachprodukt; eine Aktivierungseinheit (30), beispielsweise in Form einer IR- und/oder NIR-Strahlungseinheit oder Induktionseinheit, zum mindestens teilweise Aktivieren des Beschichtungsmaterials (nach mindestens teilweiser Vernetzung) (4) auf dem Metallflachprodukt; eine Applikationseinheit (50), beispielsweise eine Kaschier-Einheit, vorzugsweise in Form einer Doppelrollen-Einheit, zum Applizieren einer organischen Folie (5) auf dem Metallflachprodukt und damit Verbinden der Folie mit dem Metallflachprodukt; optional eine Kühleinheit (60), beispielsweise eine Luftkühlung, optional zusätzlich Wasserkühlung, zum Kühlen (6) des mit der applizierten Folie beschichteten Metallflachprodukts; eine Aufhaspler (70) zum Aufhaspeln (7) des mit einer organischen Folie beschichteten Metallflachprodukts.

Die organische Folie (8) kann in Coil-Form bereitgestellt werden und auf einem Abhaspler (80) in der Bandbeschichtungsanlage (100) platziert und abgerollt werden. Vor der Applikationseinheit (50) zum Applizieren der organischen Folie (5) auf dem Metallflachprodukt und damit Verbinden der Folie mit dem Metallflachprodukt kann die Folie (8) optional eine Erwärmungseinheit (90), beispielsweise eine IR- und/oder NIR-Einheit oder Induktionseinheit, zum Erwärmen (9) der Folie durchlaufen.

Die Ausführung zeigt eine einseitige Applikation einer organischen Folie (8). Selbstverständlich kann auch eine beidseitige Applikation erfolgen, entweder gleichzeitig oder zeitlich versetzt, hier nicht dargestellt.

## Patentansprüche

1. Verfahren zum Herstellen eines mit einer organischen Folie beschichteten Metallflachprodukts, umfassend die Schritte:
- Bereitstellen eines Metallflachprodukts (1);
- Auftragen eines flüssigen Beschichtungsmaterials (2) auf dem Metallflachprodukt;
- mindestens teilweise Vernetzen des flüssig aufgetragenen Beschichtungsmaterials zu einem mindestens teilweise vernetzten Beschichtungsmaterial (3) auf dem Metallflachprodukts;
- Applizieren einer organischen Folie (5) auf dem Metallflachprodukt;
**dadurch gekennzeichnet, dass**
das mindestens teilweise vernetzte Beschichtungsmaterial (3) mindestens teilweise aktiviert wird zu einem mindestens teilweise vernetzten und mindestens teilweise aktivierten Beschichtungsmaterials (4), bevor die organische Folie auf dem Metallflachprodukt appliziert wird.

2. Verfahren nach Anspruch 1, wobei das Aktivieren des mindestens teilweise vernetzten Beschichtungsmaterials (3) mit einer PMT zwischen 100 und 300 °C durchgeführt wird.

3. Verfahren nach einem der vorgenannten Ansprüche, wobei das mindestens teilweise Aktivieren des mindestens teilweise vernetzten Beschichtungsmaterials (3) mittels thermischer Strahlung mit einer Aktivierungseinheit (40) in Form eines IR- oder NIR-Strahlers oder Induktionseinheit durchgeführt wird.

4. Verfahren nach einem der vorgenannten Ansprüche, wobei das mindestens teilweise Vernetzen des flüssig aufgetragenen Beschichtungsmaterials (2) mit einer PMT zwischen Raumtemperatur und 180 °C durchgeführt wird.

5. Verfahren nach einem der vorgenannten Ansprüche, wobei das mindestens teilweise Vernetzen des flüssig aufgetragenen Beschichtungsmaterials (2) mittels aktinischer Strahlung mit einer Strahlungseinheit (30) in Form eines UV- oder Korpuskular-, bevorzugt EB-Strahlers durchgeführt wird.

6. Verfahren nach einem der vorgenannten Ansprüche, wobei ein lösemittelfreies Beschichtungsmaterial verwendet wird.

7. Verfahren nach einem der vorgenannten Ansprüche, wobei die Folie (8) vor dem Applizieren auf dem Metallband eine Erwärmungseinheit (90) zum zumindest teilweisen Erwärmen (9) der Folie durchläuft.

8. Verfahren nach einem der vorgenannten Ansprüche, wobei das Metallflachprodukt (1) ein Stahlflachprodukt ist.

9. Verfahren nach Anspruch 8, wobei das Stahlflachprodukt mit einem zinkbasierten Überzug beschichtet ist.

10. Verfahren nach Anspruch 9, wobei das Stahlflachprodukt schmelztauchbeschichtet ist.

11. Verfahren nach Anspruch 9, wobei das Stahlflachprodukt elektrolytisch beschichtet ist.

12. Verfahren nach einem der Ansprüche 1 bis 7, wobei das Metallflachprodukt (1) ein Aluminiumflachprodukt ist.

13. Metallflachprodukt mit einer darauf ein- oder beidseitig applizierten Folie, wobei zwischen Folie und Metalloberfläche ein mit aktinischer Strahlung mindestens teilweise vernetztes und gegebenenfalls mit thermischer Strahlung mindestens teilweise vernetztes Beschichtungsmaterial angeordnet ist.

14. Metallflachprodukt nach Anspruch 13, wobei die applizierte Folie bevorzugt kovalent mit dem mindestens teilweise vernetzten Beschichtungsmaterial verbunden ist.
